# EUROPÄISCHE PATENTSCHRIFT

(11) **EP 1 447 275 B1**
(45) Veröffentlichungstag und Bekanntmachung des Hinweises auf die Patenterteilung: **29.03.2006**
(21) Anmeldenummer: 04001279.1
(22) Anmeldetag: 22.01.2004
(51) Int. Cl.: B60R 5/04, B60R 21/06

(54) **Kraftfahrzeug mit einer Schutzvorrichtung für einen Laderaum des Kraftfahrzeuges**
Vehicle with a protection device for a luggage compartment of the vehicle
Véhicule avec un dispositif de protection pour un coffre du véhicule

(30) Priorität: 14.02.2003 DE 10307228
(43) Veröffentlichungstag der Anmeldung: 18.08.2004
(73) Patentinhaber: BOS GmbH & Co. KG, 73760 Ostfildern (DE)
(72) Erfinder: Ehrenberger, Marina, 73730 Esslingen (DE)
(74) Vertreter: Patentanwälte Ruff, Wilhelm, Beier, Dauster & Partner

(56) Entgegenhaltungen:
- EP-A- 0 712 757
- DE-A- 19 628 699
- DE-C- 19 621 009
- DE-C- 19 735 463

## Beschreibung

Die Erfindung betrifft ein Kraftfahrzeug mit einer Schutzvorrichtung für einen Laderaum des Kraftfahrzeugs, die wenigstens eine Wickelwelle aufweist, die zwischen zwei Gehäuseseitenteilen gelagert ist, die einander zwischen einer in fahrzeugfesten Halterungen fixierten Funktionsposition der Schutzvorrichtung und einer Entnahmeposition der Schutzvorrichtung in Längsrichtung einer Wickelachse der Wickelwelle koaxial beweglich zugeordnet sind.

Ein derartiges Kraftfahrzeug ist aus der EP 0 712 757 A1 bekannt. In dem Kraftfahrzeug ist ein Laderaum vorgesehen, der mit einer Schutzvorrichtung in Form einer Laderaumabdeckung versehen ist. Die Laderaumabdeckung weist zwei Gehäuseseitenteile auf, zwischen denen eine Wickelwelle drehbar gelagert ist. Auf der Wickelwelle ist ein flexibles Flächengebilde auf- und abwickelbar gehalten. Zur Befestigung der Laderaumabdeckung in fahrzeugfesten Halterungen des Laderaumes weisen die Gehäuseseitenteile an ihren Stirnenden Rastnocken auf, die koaxial zu einer Wickelachse der Wickelwelle in korrespondierende Rastaufnahmen der fahrzeugfesten Halterungen eintauchen. Zum Montieren und Demontieren der Laderaumabdeckung ist wenigstens eines der beiden Gehäuseseitenteile in Längsrichtung der Wickelachse linear beweglich angeordnet, wobei dieses Gehäuseseitenteil axial nach außen federkraftbeaufschlagt ist. Um die Laderaumabdeckung in den fahrzeugfesten Halterungen montieren zu können, wird die Laderaumabdeckung mit beiden Händen im Bereich der beiden Gehäuseseitenteile ergriffen. Anschließend wird manuell auf das wenigstens eine axial bewegliche Gehäuseseitenteil ein axialer Druck zur Mitte der Wickelwelle hin ausgeübt, wodurch das bewegliche Gehäuseseitenteil gegen die nach außen wirkende Federkraft nach innen gedrückt wird. Anschließend wird die Laderaumabdeckung derart zwischen den gegenüberliegenden fahrzeugfesten Halterungen positioniert, dass die stirnseitigen Rastnocken mit den korrespondierenden Rastaufnahmen der fahrzeugfesten Halterungen koaxial fluchten. Anschließend wird die manuelle Kraft von dem beweglichen Gehäuseseitenteil weggenommen, wodurch die Federkraft zwangsläufig das Gehäuseseitenteil nach außen drückt und so die Laderaumabdeckung in die fahrzeugfesten Halterungen hineindrückt. Eine Demontage erfolgt in entsprechend umgekehrter Funktion durch Aufbringen einer manuellen Kraft auf das bewegliche Gehäuseseitenteil zur Mittelachse der Wickelwelle hin, wodurch die Laderaumabdeckung aus den Rastaufnahmen der fahrzeugfesten Halterungen freikommt und entnommen werden kann.

Aus der DE 197 35 463 C1 ist ein Kraftfahrzeug mit einer Schutzvorrichtung für einen Laderaum des Kraftfahrzeugs bekannt, die als Sicherheitsnetzanordnung ausgeführt ist. Die Sicherheitsnetzanordnung weist zwei Gehäuseseitenteile auf, zwischen denen eine Wickelwelle zum Auf- und Abwickeln des Sicherheitsnetzes drehbar gelagert ist. Beide Gehäuseseitenteile sind relativ zu der Wickelwelle axial fixiert. Zur Befestigung der Sicherheitsnetzanordnung in fahrzeugfesten Halterungen sind stirnseitig an beiden Gehäuseseitenteilen Püzköpfe vorgesehen, die gemäß einer speziellen Ausführungsform zwischen einer Ruhestellung und einer Funktionsstellung koaxial zur Wickelachse der Wickelwelle beweglich angeordnet sind. Für eine Montage der Sicherheitsnetzanordnung in den fahrzeugfesten Halterungen weisen die fahrzeugfesten Halterungen jeweils eine Steckaufnahme auf, die in Fahrzeuglängsrichtung zum Heck des Fahrzeugs hin offen ist und korrespondierend formschlüssig zu dem Profil des jeweiligen Pilzkopfes ausgeführt ist, so dass der Pilzkopf vom Heckbereich des Kraftfahrzeugs her in Fahrzeuglängsrichtung in die entsprechende Steckaufnahme eingesteckt werden kann. Dadurch wird eine Fixierung der Gehäuseseitenteite und damit auch der Sicherheitsnetzanordnung in den fahrzeugfesten Halterungen erreicht.

Die DE 196 28 699 A1 offenbart ein Kraftfahrzeug mit einem variablen Innenraum, in dem eine Sitzkissenteil und ein Sitzlehnenteil angeordnet sind, die zwischen einer Gebrauchsstellung, in der sie gemeinsam eine Rücksitzbank des Kraftwagens bilden, und einer Alternativstellung verlagerbar sind. Hierzu stehen vom Sitzkissenteil und vom Sitzlehnenteil seitlich Haltemittel ab, die lösbar in zugeordneten Aufnahmen an den Seitenwänden des Kraftfahrzeugs festlegbar sind. Der Sitzkissenteil und der Sitzlehnenteil sind gelenkig miteinander verbunden und werden während ihrer Verlagerung in eine Alternativstellung mit mindestens zwei koaxialen Haltemitteln in seitlichen Schiebeführungen des Kraftwagens abgestützt, entlang denen eine Rücksitzbank schiebeverlagerbar ist.

Eine weitere Schutzvorrichtung ist in Form einer Laderaumabdeckung aus der DE 196 21 009 C1 bekannt. Die bekannte Laderaumabdeckung weist ein Kassettengehäuse auf, in dem eine Wickelwelle drehbar und relativ zu ihrer Drehachse axial schwimmend gelagert ist. Auf der Wickelwelle ist ein flexibles Flächengebilde in Form einer Abdeckplane festgelegt, die auf die Wickelwelle aufgerollt oder von dieser abgewickelt werden kann. Die Abdeckplane wird zur Abdeckung eines Laderaumes in ihrer Funktionsposition etwa horizontal aufgespannt. Das Kassettengehäuse ist in fahrzeugseitigen Halterungen, die vorzugsweise an gegenüberliegenden Seitenwänden des Laderaumes vorgesehen sind, lösbar gehalten. Um ein Lösen und ein erneutes Einsetzen des Kassettengehäuses in die fahrzeugseitigen Halterungen zu ermöglichen, wird das Kassettengehäuse durch zwei Gehäuseseitenteile gebildet, die die Wickelwelle von gegenüberliegenden Stirnenden her übergreifen. Die beiden Gehäuseseitenteile sind becher- oder hohlprofilartig gestaltet. Das eine Gehäuseseitenteil ist kürzer gestaltet als das andere Gehäuseseitenteil und übergreift dieses andere Gehäuseseitenteil außen. Das kürzere Gehäuseseitenteil ist axial beweglich relativ zu dem anderen Gehäuseseitenteil angeordnet. Beide Gehäuseseitenteile weisen an ihren außenseitigen Stirnenden Haltezapfen auf, die in entsprechende Aufnahmen der fahrzeugseitigen Halterungen einfügbar sind. Die beiden Gehäuseteile können gegen entsprechende Druckkräfte von Axialfedern axial zur Mitte hin gedrückt werden, wodurch sie in einer axial verkürzten Freigabeposition einrastbar sind. Diese gesperrte Position kann manuell freigegeben werden, wodurch die Axialfedern die Gehäuseseitenteile in ihre vergrößerte Fixierposition nach außen drücken. In dieser Fixierposition ist das Kassettengehäuse in fahrzeugseitigen Halterungen fixiert, wenn die Haltezapfen in die korrespondierenden Aufnahmen der fahrzeugseitigen Halterungen formschlüssig eingreifen.

Um zu verhindern, dass das Kassettengehäuse bei Seitenaufprallbelastungen auf das Kraftfahrzeug aus den fahrzeugseitigen Halterungen herausgeschleudert wird, ist zwischen den beiden Gehäuseseitenteilen eine Sperrvorrichtung vorgesehen, die in der Fixierposition der Gehäuseseitenteile eine formschlüssige Arretierung zwischen den beiden Gehäuseseitenteilen erzielt. Hierdurch wird eine Bewegung der Gehäuseseitenteile relativ zueinander verhindert, wodurch das Kassettengehäuse nicht ausschließlich durch die Federkraft der Axialfedern, sondern zusätzlich durch entsprechenden Formschluss zwischen den Gehäuseseitenteilen gesichert wird. Trotz der grundsätzlichen Axialbeweglichkeit der beiden Gehäuseseitenteile relativ zueinander, verhalten sich diese in der durch die Sperrvorrichtung blockierten Position ähnlich einem starren Kassettengehäuse.

Aufgabe der Erfindung ist es, ein Kraftfahrzeug der eingangs genannten Art zu schaffen, bei dem ein Lösen der Schutzvorrichtung aus fahrzeugseitigen Halterungen bei Seitenaufprallbelastungen auf das Kraftfahrzeug in verbesserter Weise verhindert werden soll.

Diese Aufgabe wird dadurch gelöst, dass wenigstens ein Gehäuseseitenteil mit der korrespondierenden fahrzeugfesten Halterung durch eine mechanische Sicherungseinrichtung lösbar formschlüssig -auf die Längsrichtung der Wickelachse bezogen- verriegelt ist. Die wesentliche erfindungsgemäße Idee ist es, eine in Richtung der Wickelachse formschlüssige Verbindung zwischen der Schutzvorrichtung und der fahrzeugseitigen Halterung zu erzielen. Diese formschlüssige Verbindung wird insbesondere durch eine Verkrallung wenigstens eines Gehäuseseitenteiles mit der fahrzeugseitigen Halterung erzielt. Durch die erfindungsgemäße Lösung wird die Anbindung der Schutzvorrichtung, d.h. des Gehäuseseitenteiles, an den Fahrzeuginnenraum verstärkt. Vorzugsweise sind die fahrzeugseitigen Halterungen an gegenüberliegenden Seitenwänden des Laderaumes vorgesehen. Als Schutzvorrichtung im Sinne der Erfindung dient sowohl eine reine Laderaumabdeckung, bei der zur Bildung eines Sichtschutzes ein etwa horizontaler Auszug eines undurchsichtigen Flächengebildes knapp unterhalb einer Fahrzeugbordkante erfolgt, als auch eine reine Trennvorrichtung, bei der vorzugsweise ein Trennnetz etwa vertikal nach oben ausziehbar ist, um eine Abtrennung des Laderaumes von einem Fahrzeuginsassenraum zu ermöglichen. Eine derartige Trennvorrichtung dient insbesondere als Rückhalteschutz für in dem Laderaum befindliches Transportgut. Eine Schutzvorrichtung umfasst auch eine Kombination von einer Laderaumabdeckung und einer Trennvorrichtung wie auch andere Arten von Sichtschutzvorrichtungen. Erfindungsgemäß ist entweder vorgesehen, dass die mechanische Sicherungseinrichtung lediglich einem Gehäuseseitenteil oder auch jeweils eine mechanische Sicherungseinrichtung jedem Gehäuseseitenteil zugeordnet sind.

In Ausgestaltung der Erfindung weisen die Gehäuseseitenteile unterschiedlich schwere Massen auf, und die Sicherungseinrichtung ist dem schwereren Gehäuseseitenteil zugeordnet. Bei dieser Ausgestaltung sind die Gehäuseseitenteile asymmetrisch gestaltet, indem ein Gehäuseseitenteil sich über einen Großteil der Länge der Wickelwelle erstreckt und das kürzere Gehäuseseitenteil relativ zu diesem größeren Gehäuseseitenteit axial beweglich angeordnet ist. Das schwerere und längere Gehäuseseitenteil kann vorzugsweise zweiteilig aus dem eigentlichen, stirnseitigen Becherteil einerseits und einem die Wickelwelle umgebenden Hohlprofil andererseits gebildet sein, wobei das Becherteil und das Hohlprofil fest miteinander verbunden sind. Das andere, kürzere und leichtere Gehäuseseitenteil ist relativ zu dem Hohlprofil auf der dem Becherteil gegenüberliegenden Seite axial beweglich angeordnet. Diese Ausgestaltung geht von der Erkenntnis aus, dass bei Seitenaufprallbelastungen sich ein Kassettengehäuse mit derart asymmetrisch gestalteten Gehäuseseitenteilen vorzugsweise im Bereich der Fixierung des schwereren Gehäuseseitenteiles in der zugeordneten fahrzeugseitigen Halterung löst. Durch die formschlüssige Verkrallung oder Verrastung zwischen dem schwereren Gehäuseseitenteil und der dazugehörigen fahrzeugseitigen Halterung wird ein Lösen der Schutzvorrichtung bei Seitenaufprallbelastungen aus dieser fahrzeugseitigen Halterung zuverlässig vermieden.

Durch die zusätzliche, formschlüssige Anbindung der Schutzvorrichtung an wenigstens eine fahrzeugseitige Halterung wird bei Seitenaufprallbelastungen zuverlässig verhindert, dass die Schutzvorrichtung sich aus den fahrzeugseitigen Halterungen lösen und unkontrolliert im Fahrzeuginnenraum oder im Laderaum umhergeschleudert werden kann.

In weiterer Ausgestaltung der Erfindung ist die Wickelwelle axial schwimmend zwischen den Gehäuseseitenteilen gelagert und durch Federkraft in einer axialen Mittelstellung zentriert angeordnet, und die Wickelwelle steht mit der Sicherungseinrichtung derart in Wirkverbindung, dass in einer Freigabestellung der Schutzvorrichtung eine Axialbewegung der Wickelwelle zu einer Entriegelung der Sicherungseinrichtung führt. Dadurch wird unter Zuhilfenahme der schwimmenden Lagerung der Wickelwelle ein Lösen der Sicherungseinrichtung erzielt, um bei Bedarf die Schutzvorrichtung aus dem Laderaum entfernen zu können.

In weiterer Ausgestaltung der Erfindung weist die Sicherungseinrichtung wenigstens einen an dem Gehäuseseitenteil beweglich gelagerten und in seiner Rastposition quer zur Drehachse der Wickelwelle ausgerichteten Raststeg auf, dem an der zugehörigen fahrzeugseitigen Halterung jeweils eine korrespondierende Rastaufnahme zugeordnet ist. Dies ist eine besonders funktionssichere mechanische Lösung, um den gewünschten Formschluss in Längsrichtung der Wickelwelle zu erzielen.

In weiterer Ausgestaltung der Erfindung ist die Wickelwelle auf ihrer der Sicherungseinrichtung zugewandten Stirnseite mit einer Zwangsführungseinrichtung versehen, die mit dem Raststeg derart zusammenwirkt, dass bei einer Axialverschiebung der Wickelwelle der Raststeg in seine Freigabeposition überführt wird. Bei einer besonders einfachen Ausgestaltung ist die Stirnseite der Wickelwelle unter Bildung einer Keilfläche angeschrägt, wobei am Raststeg eine korrespondierende schiefe Ebene gebildet ist. Bei einer Axialbewegung der Wickelwelle gleiten die Keilfläche und die schiefe Ebene aneinander entlang, wodurch auf den Raststeg eine zwangsläufige Bewegung in Richtung der Freigabeposition ausgeübt wird. Besonders vorteilhaft ist der Raststeg als schwenkbeweglich gelagerter Rasthebel ausgeführt. Bei einer derartigen Ausgestaltung ist vorzugsweise ein entsprechender Hebelarm des Rasthebels so ausgerichtet, dass er die Anlaufschräge bzw. die Keilfläche bildet und bei einem Auftreffen der axial bewegten Wickelwelle den Rasthebel in seine Freigabeposition verschwenkt.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt perspektivisch eine Ausführungsform einer erfindungsgemäßen Schutzvorrichtung in einem Laderaum eines Kraftfahrzeugs,
- Fig. 2: in schematischer Schnittdarstellung die Schutzvorrichtung gemäß Fig. 1 in ihrer in fahrzeugseitigen Halterungen des Laderaumes fixierten Position,
- Fig. 3: die Schutzvorrichtung nach Fig. 2 in einer Freigabeposition und
- Fig. 4: die Schutzvorrichtung nach Fig. 3 in ihrer Entnahmeposition.

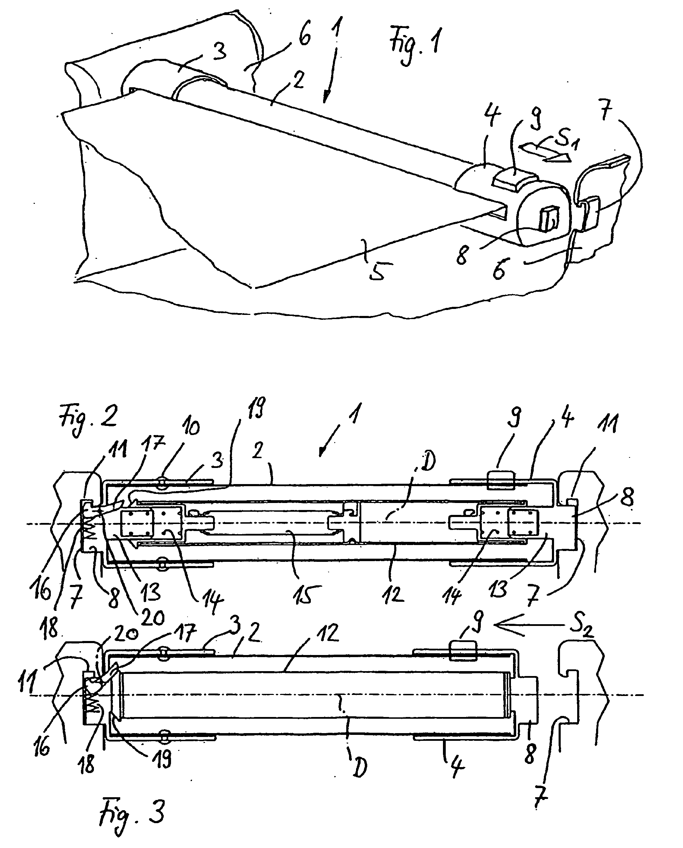

Eine Schutzvorrichtung für einen Laderaum eines Kraftfahrzeugs ist bei der Ausführungsform nach den Fig. 1 bis 4 in Form einer Laderaumabdeckung 1 gestaltet. Die Laderaumabdeckung 1 weist ein Kassettengehäuse auf, das in fahrzeugseitigen Halterungen 7 in seiner Funktionsposition angeordnet ist. Die fahrzeugseitigen Halterungen 7 sind in Seitenwänden 6 des Laderaumes vorgesehen. Das Kassettengehäuse ist knapp unterhalb einer Fahrzeugbordkante positioniert und erstreckt sich horizontal in Fahrzeugquerrichtung. Das Kassettengehäuse ist in seiner normalen Funktionsposition vorzugsweise unmittelbar hinter einer aus Übersichtlichkeitsgründen nicht dargestellten Rücklehnenanordnung einer Fondsitzanordnung positioniert.

In dem Kassettengehäuse ist eine Wickelwelle 12 um eine Drehachse D drehbar gelagert. Die Wickelwelle 12 trägt ein flexibles Flächengebilde 5, vorliegend in Form einer nicht transparenten Abdeckplane, das in grundsätzlich bekannter Weise durch einen Schlitz an einer Längsseite des Kassettengehäuses ausziehbar ist und zwischen einer den Laderaum etwa horizontal abdeckenden Abdeckposition und einer in dem Kassettengehäuse aufgerollt untergebrachten Ruheposition beweglich angeordnet ist. Die Wickelwelle 12 ist als Hohlprofil gestaltet, das an seinen gegenüberliegenden Stirnenden an koaxialen Lagerzapfen 13 drehbar gelagert ist. Den Lagerzapfen 13 sind zur Wellenmitte hin wirkende Zentrierfedern 14 zugeordnet, die die Wickelwelle 12 - auf die Drehachse D bezogen - axial schwimmend lagern. In dem Hohlprofil der Wickelwelle 12 ist eine Rückholfeder 15 integriert, die die Wickelwelle 12 in Aufwickelrichtung federbeaufschlagt.

Das Kassettengehäuse der Laderaumabdeckung wird durch zwei Gehäuseseitenteile 2, 3; 4 gebildet. Das eine Gehäuseseitenteil 2, 3 weist stirnseitig ein becherartiges Seitenteil 3 auf, das durch ein Gehäusehohlprofil 2 über die gesamte Länge der Wickelwelle 12 verlängert ist. Das Gehäusehohlprofil 2 und das becherartige Seitenteil 3 sind durch Nietverbindungen 10 fest miteinander verbunden, wodurch sich das gemeinsame, zweiteilige Gehäuseseitenteil 2, 3 ergibt. Das Gehäuseseitenteil 2, 3 bildet somit zum einen das in der Darstellung gemäß den Fig. 2 bis 4 linke Stirnende und zum anderen den Gehäuseabschnitt über die gesamte Länge der Wickelwelle 12. Auf der dem durch das becherartige Seitenteil 3 geschlossenen Stimende gegenüberliegenden Seite ist die offene Stirnseite des Gehäusehohlprofiles 2 des Gehäuseseitenteiles 2, 3 durch ein weiteres becherartiges Seitenteil verschlossen, das koaxial zu der Drehachse D axial auf dem Gehäusehohlprofil 2 beweglich angeordnet ist. Dieses Seitenteil bildet das andere Gehäuseseitenteil 4. Durch das Gehäuseseitenteil 4 wird das gegenüberliegende geschlossene Stimende des Kassettengehäuses gebildet.

Beide Stirnseiten beider Gehäuseseitenteile 2, 3; 4 weisen außenseitig jeweils einen Fixiernocken 8 auf, der in einer auf die Abmessungen des Fixiernockens 8 jeweils abgestimmten Halteaufnahme 7 der jeweiligen fahrzeugseitigen Halterung in Fahrzeuglängsrichtung sowie in Fahrzeughochrichtung in seiner Funktionsposition (Fig. 2) formschlüssig gehalten ist.

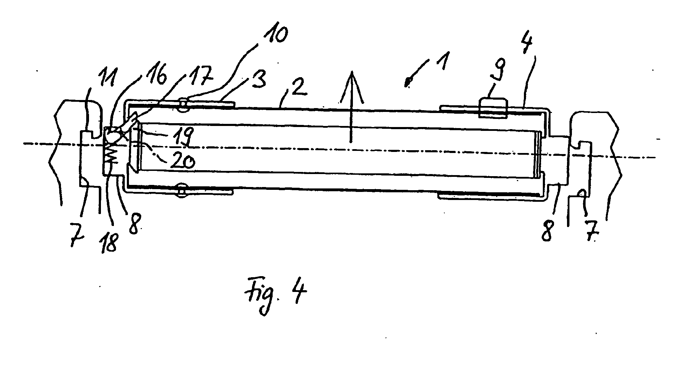

Die Lagerzapfen 13 sind jeweils einstückig an den becherartigen Seitenteilen angeformt und ragen von den Stirnseiten der becherartigen Seitenteile 3, 4 nach innen ab. Zwischen jedem Lagerzapfen 13 und einer korrespondierenden Anschlagfläche des entsprechenden Stirnendes der Wickelwelle 12 stützt sich die jeweilige Zentrierfeder 14 ab. Die dem Gehäuseseitenteil 4 zugeordnete Zentrierfeder 14 bildet somit eine Rückstellfeder für die Axialbeweglichkeit des Gehäuseseitenteiles 4. Da die Wickelwelle 12 schwimmend gelagert ist, trägt auch die gegenüberliegende Zentrierfeder 14 zur axialen Rückstellkraft auf das Gehäuseseitenteil 4 bei. Die Zentrierfedern 14, die gleich große Federkräfte aufbringen, gewährleisten zudem, dass die Wickelwelle 12 sich innerhalb des Kassettengehäuses unabhängig von der tatsächlichen Länge des Kassettengehäuses immer in der Mitte zentriert hält. Die tatsächliche Länge des Kassettengehäuses ist zwischen einer in Fig. 3 dargestellten Ruheposition und einer in Fig. 2 dargestellten Funktionsposition veränderlich. Eine manuell bedienbare Blockiereinrichtung 9 dient dazu, das Gehäuseseitenteil 4 in seiner nahezu vollständig auf das Gehäusehohlprofil 2 axial aufgeschobenen Ruheposition zu fixieren. Durch ein Drücken eines Betätigungsknopfes der Blockiereinrichtung 9 wird das Gehäuseseitenteil 4 für eine Axialbewegung freigegeben, so dass die Druckkräfte der Zentrierfedern 14 das Gehäuseseitenteil 4 axial nach außen drücken, wodurch die Gesamtlänge des Kassettengehäuses sich vergrößert. Dadurch ist es möglich, das Kassettengehäuse in den fahrzeugseitigen Halterungen 7 zu positionieren und zu fixieren. Die Axialbewegung nach außen ist in Fig. 1 durch den Pfeil S₁ und die Axialbewegung nach innen in Fig. 3 durch den Pfeil S₂ verdeutlicht.

Um das Kassettengehäuse in seine fahrzeugseitigen Halterungen 7 einsetzen zu können, wird das Gehäuseseitenteil 4 zunächst manuell axial auf das Gehäusehohlprofil 2 des anderen Gehäuseseitenteiles 2, 3 aufgeschoben, bis der Betätigungsknopf der Blockiereinrichtung 9 einrastet und das Gehäuseseitenteil 4 in dieser axial inneren Position fixiert. In dieser Position wird das Kassettengehäuse von Hand in dem Laderaum auf Höhe der fahrzeugseitigen Halterungen 7 positioniert und anschließend durch Drücken des Betätigungsknopfes der Blockiereinrichtung 9 die Axialbeweglichkeit des Gehäuseseitenteiles 4 freigegeben. Die Druckkräfte der Zentrierfedern 14 drücken zwangsläufig das Gehäuseseitenteil 4 nach außen, wodurch die Fixiernocken 8 in die Halteaufnahmen der fahrzeugseitigen Halterungen 7 eintauchen und das Kassettengehäuse in dieser Position fixieren.

Um bei Seitenaufprallbelastungen auf das Kraftfahrzeug zu verhindern, dass das Kassettengehäuse durch etwa in Längsrichtung der Wickelachse D wirkende Aufprallkräfte aus den fahrzeugseitigen Halterungen 7 herausgeschleudert wird, ist dem längeren und demzufolge schwereren Gehäuseseitenteil 2, 3 eine zusätzliche Sicherungseinrichtung 11, 16 bis 18, 20 zugeordnet, die zusätzlich zu der durch Fixiernocken 8 und Halteaufnahme 7 erfolgten formschlüssigen Fixierung noch eine formschlüssige Verkrallung in Fahrzeugquerrichtung, d.h. in Längsrichtung der Wickelachse D erzielt. Hierzu ist im Bereich einer Oberseite der Halteaufnahme 7 ein als Rastaufnahme dienender Hinterschnitt 11 vorgesehen, in den in verriegelter Funktionsposition ein Raststeg 16 eines Riegelhebels 16, 17 eingreift. Der Riegelhebel ist an dem becherförmigen Seitenteil 3 im Bereich des Fixiemockens 8 um eine quer zur Wickelachse D ausgerichtete Schwenkachse 20 kippbeweglich gelagert und in Richtung seiner Verriegelungsposition durch eine Druckfeder 18 beaufschlagt. Der Raststeg 16 ist im Bereich des einen Hebelarmes des Riegelhebels vorgesehen. Der - auf die Schwenkachse 20 bezogen - andere Hebelarm 17 des Riegelhebels ist in seiner verriegelten Funktionsposition derart schräg ausgerichtet, dass er eine keilförmige Anlauffläche für eine konische Anlaufschräge 19 eines zugeordneten Stirnendes der Wickelwelle 12 bildet. Die konische Anlaufschräge und die entsprechende Keilfläche des Hebelarmes 17 sind derart aufeinander abgestimmt, dass eine Axialbewegung der Wickelwelle 12 den Hebelarm 17 beim Auftreffen der Anlaufschräge 19 nach oben schwenkt, wodurch aufgrund der Hebelwirkung zwangsläufig der Raststeg 16 nach unten verschwenkt wird und den Hinterschnitt 11 freigibt (Fig. 3). Eine Axialbewegung der Wickelwelle 12 wird durch eine entsprechende Axialbewegung des Gehäuseseitenteiles 4 zur Mitte des anderen Gehäuseseitenteiles 2, 3 hin initiiert. Da die Blockiereinrichtung 9 das Gehäuseseitenteil 4 in seiner axial inneren Ruheposition gemäß Fig. 3 fixiert, wird zwangsläufig auch der Riegelhebel in seiner Freigabeposition fixiert, so dass eine einfache Entnahme des Kassettengehäuses in Pfeilrichtung gemäß Fig. 4 möglich ist. Sobald das Kassettengehäuse erneut wieder eingesetzt wird, wird nach Freigabe der Axialbeweglichkeit des Gehäuseseitenteiles 4 durch den entsprechenden Betätigungsknopf der Blockiereinrichtung 9 das Gehäuseseitenteil 4 wieder in seine axial äußere Funktionsposition überführt, wodurch die Druckfedern 14 zwangsläufig auch die Wickelwelle 12 wieder in der vergrößerten Gehäusemitte zentrieren und dadurch von dem Riegelhebel 16, 17 entfernen. Die Druckkraft der Druckfeder 18 drückt somit zwangsläufig den Raststeg 16 des Riegelhebels in den Hinterschnitt 11 der Halteaufnahme 7 hinein, so dass die formschlüssige Verkrallung in Längsrichtung der Wickelachse D wieder hergestellt ist.

Die bei dem erfindungsgemäßen Ausführungsbeispiel vorgenommene Verkrallung zwischen dem Gehäuseseitenteil 2, 3 und der fahrzeugseitigen Halterung 7 in Längsrichtung der Wickelachse D gewährleistet bei einem Fahrzeugseitenaufprall eine ausreichende Sicherung des Kassettengehäuses in den fahrzeugseitigen Halterungen. Ein Umherschleudern des Kassettengehäuses kann hierdurch vermieden werden. Auf eine zusätzliche Sperreinheit innerhalb der Blockiereinrichtung 9 für die äußere Funktionsposition des Gehäuseseitenteiles 4, wie sie in der DE 196 21 009 C1 beschrieben ist, kann verzichtet werden. Bei der DE 196 21 009 C1 war es die wesentliche Idee, die Axialbeweglichkeit der Gehäuseseitenteile in der Funktionsposition zu unterbinden und so die Funktion eines starren Kassettengehäuses zu erzielen. Die erfindungsgemäße Verkrallung zwischen Kassettengehäuse und fahrzeugseitiger Halterung ermöglicht eine Sicherung des Kassettengehäuses an wenigstens einer entsprechenden fahrzeugseitigen Wandung des Laderaumes, obwohl die Axialbeweglichkeit der Gehäuseseitenteile während der Funktion nicht unterbunden ist. Hierdurch ist eine verbesserte Anpassbarkeit an Toleranzen in den Abständen zwischen den gegenüberliegenden fahrzeugseitigen Halterungen des Laderaumes gegeben. Bei einem nicht dargestellten Ausführungsbeispiel der Erfindung ist auch an dem gegenüberliegenden Gehäuseseitenteil 4 eine weitere Verkrallung analog dem Riegelhebel des Gehäuseseitenteiles 2, 3 vorgesehen. Zu diesem Zwecke kann die gegenüberliegende Rastaufnahme in Form des Hinterschnittes 11 benützt werden.

## Patentansprüche

1. Kraftfahrzeug mit einer Schutzvorrichtung (1) für einen Laderaum des Kraftfahrzeugs, die wenigstens eine Wickelwelle (12) aufweist, die zwischen zwei Gehäuseseitenteilen (2, 3; 4) gelagert ist, die einander zwischen einer in fahrzeugfesten Halterungen (7) fixierten Funktionsposition der Schutzvorrichtung (1) und einer Entnahmeposition der Schutzvorrichtung (1) in Längsrichtung einer Wickelachse (D) der Wickelwelle (12) koaxial beweglich zugeordnet sind, **dadurch gekennzeichnet, dass** wenigstens ein Gehäuseseitenteil (2, 3; 4) mit der korrespondierenden fahrzeugfesten Halterung (7) durch eine mechanische Sicherungseinrichtung (11, 16-18, 20) lösbar formschlüssig -auf die Längsrichtung der Wickelachse (D) bezogen- verriegelt ist.

2. Kraftfahrzeug nach Anspruch 1, **dadurch gekennzeichnet, dass** die Gehäuseseitenteile (2, 3; 4) unterschiedlich schwere Massen aufweisen, und dass die Sicherungseinrichtung (11, 16, bis 18, 20) dem schwereren Gehäuseseitenteil (2, 3) zugeordnet ist.

3. Kraftfahrzeug nach Anspruch 1, **dadurch gekennzeichnet, dass** die Wickelwelle (12) axial schwimmend zwischen den Gehäuseseitenteilen (2, 3; 4) gelagert ist und durch Federkraft in einer axialen Mittelstellung zentriert angeordnet ist, und dass die Wickelwelle (12) mit der Sicherungseinrichtung (11, 16 bis 18, 20) derart in Wirkverbindung steht, dass eine Axialbewegung der Wickelwelle in Richtung einer Freigabestellung der Schutzvorrichtung zu einer Entriegelung der Sicherungseinrichtung führt.

4. Kraftfahrzeug nach Anspruch 1, **dadurch gekennzeichnet, dass** die Sicherungseinrichtung wenigstens einen an dem Gehäuseseitenteil (2, 3) beweglich gelagerten und in seiner Rastposition quer zur Wickelachse (D) der Wickelwelle (12) ausgerichteten Raststeg (16) aufweist, dem an der zugehörigen fahrzeugseitigen Halterung (7) jeweils eine korrespondierende Rastaufnahme (11) zugeordnet ist.

5. Kraftfahrzeug nach Anspruch 4, **dadurch gekennzeichnet, dass** Federmittel (18) vorgesehen sind, die den Raststeg (16) in Richtung seiner Rastposition durch Federkraft beaufschlagen.

6. Kraftfahrzeug nach Anspruch 4, **dadurch gekennzeichnet, dass** die Wickelwelle (12) auf ihrer der Sicherungseinrichtung zugewandten Stirnseite mit einer Zwangsführungseinrichtung (19) versehen ist, die mit dem Raststeg (16) derart zusammenwirkt, dass bei einer Axialverschiebung der Wickelwelle (12) der Raststeg (16) in seine Freigabeposition überführt wird.

7. Kraftfahrzeug nach Anspruch 6, **dadurch gekennzeichnet, dass** der Raststeg (16) als schwenkbeweglich gelagerter Rasthebel (16, 17) ausgeführt ist, der mit einem durch eine schräge Stirnfläche (19) der Stirnseite der Wickelwelle (12) beaufschlagbaren Hebelarm (17) versehen ist.

## Claims

1. A motor vehicle with a protective device (1) for a loading space of the motor vehicle, which device comprises at least one winding roller (12) that is mounted between two housing side parts (2, 3; 4) that are associated with one another so' as to be coaxially movable in the longitudinal direction of a winding axis (D) of the winding roller (12) between a functional position of the protective device (1) fixed in holders (7) built into the vehicle and a removal position of the protective device (1), **characterised in that** at least one housing side part (2, 3; 4) is positively locked in releasable manner - relative to the longitudinal direction of the winding axis (D) - in the corresponding holder (7) built into the vehicle by means of a mechanical securing mechanism (11, 16-18, 20).

2. A motor vehicle according to claim 1, **characterised in that** the housing side parts (2, 3; 4) are of different weights, and **in that** the securing mechanism (11, 16 to 18, 20) is associated with the heavier housing side part (2, 3).

3. A motor vehicle according to claim 1, **characterised in that** the winding roller (12) is mounted in axially floating manner between the housing side parts (2, 3; 4) and is arranged in a centred manner in an axial mid-position by spring force, and **in that** the winding roller (12) is operatively connected to the securing mechanism (11, 16 to 18, 20) in such a manner that an axial movement of the winding roller in the direction of a release position of the protective device leads to an unlocking of the securing mechanism.

4. A motor vehicle according to claim 1, **characterised in that** the securing mechanism comprises at least one locking element (16) movably mounted on the housing side part (2, 3) and oriented in its locking position transversely to the winding axis (D) of the winding roller (12) and with which at the associated holder (7) built into the vehicle a corresponding locking seat (11) is associated.

5. A motor vehicle according to claim 4, **characterised in that** spring means (18) are provided, which urge the locking element (16) towards its locking position by spring force.

6. A motor vehicle according to claim 4, **characterised in that** the winding roller (12) is provided at its end face facing the securing mechanism with a forced guidance device (29), which co-operates with the locking element (16) in such a way that on axial displacement of the winding roller (12) the locking element (16) is transferred into its release position.

7. A motor vehicle according to claim 6, **characterised in that** the locking element (16) is in the form of a pivotally mounted locking lever (16, 17), which is provided with a lever arm (17) subject to the action of a sloping front surface (19) of the end face of the winding roller (12).

## Revendications

1. Véhicule automobile avec un dispositif de protection (1) pour un espace de chargement du véhicule, qui présente au moins un arbre d'enroulement (12), lequel est logé entre deux parties latérales de carter (2, 3 ; 4), lesquelles sont attribuées réciproquement de façon mobile sur le même axe entre une position fonctionnelle du dispositif de protection (1) et une position de prélèvement du dispositif de protection (1) dans le sens longitudinal d'un axe d'enroulement (D) de l'arbre d'enroulement (12), la position fonctionnelle étant fixée dans des supports (7) solidaires du véhicule, **caractérisé en ce qu'**au moins une partie latérale de carter (2, 3 ; 4) est verrouillée par complémentarité de formes et de façon amovible - par rapport à la direction longitudinale de l'arbre d'enroulement (D) - avec la fixation (7) correspondante et solidaire du véhicule par un dispositif de blocage (11, 16 - 18, 20) mécanique.

2. Véhicule automobile selon la revendication 1, **caractérisé en ce que** les parties latérales de carter (2, 3; 4) présentent des masses de poids différents, et **en ce que** le dispositif de blocage (11, 16, jusqu'à 18, 20) est attribué à la partie latérale de carter (2, 3) plus lourde.

3. Véhicule automobile selon la revendication 1, **caractérisé en ce que** l'arbre d'enroulement (12) est logé axialement de façon flottante entre les parties latérales de carter (2, 3 ; 4) et est disposé de façon centrée par l'effet de la force de ressort dans une position centrale axiale et **en ce que** l'arbre d'enroulement (12) est en liaison active avec le dispositif de blocage (11, 16 jusqu'à 18, 20) de telle sorte qu'un déplacement axial de l'arbre d'enroulement en direction d'une position de libération du dispositif de protection entraîne un déverrouillage du dispositif de blocage.

4. Véhicule automobile selon la revendication 1, **caractérisé en ce que** le dispositif de blocage présente au moins une baguette d'encliquetage (16) logée de façon mobile sur la partie latérale de carter (2,3) et orientée dans sa position d'encliquétage transversalement à l'axe d'enroulement (D) de l'arbre d'enroulement (12), baguette à laquelle est attribué respectivement un logement d'encliquetage. (11) correspondant sur la fixation (7) côté véhiculé correspondante.

5. véhicule automobile selon la revendication 4, **caractérisé en ce que** des moyens de ressort (18) sont prévus, lesquels sollicitent la baguette d'encliquetage (16) en direction d'une position d'encliquetage par l'effet de la force de ressort.

6. Véhicule automobile selon la revendication 4, **caractérisé en ce que** l'arbre d'enroulement (12) est doté sur sa face avant, tournée vers le dispositif de blocage, d'un dispositif de guidage forcé (19), qui coopère avec la baguette d'encliquetage (16) de telle sorte que, lors d'un déplacement axial de l'arbre d'enroulement (12), la baguette d'encliquetage (16) est transférée dans sa position de libération.

7. Véhicule automobile selon la revendication 6, **caractérisé en ce que** la baguette d'encliquetage (16) est réalisée sous la forme d'un levier d'encliquetage (16, 17) logé de façon mobile en basculement, qui est doté d'un bras de levier (17) pouvant être sollicité par une face frontale (19) oblique du côté avant de l'arbre d'enroulement (12).
